# EUROPEAN PATENT APPLICATION

(11) **EP 1 389 604 A1**
(43) Date of publication of application: **18.02.2004**
(21) Application number: 02771741.2
(22) Date of filing: 21.05.2002
(51) Int. Cl.: B68G 7/06

(54) **BAG CAPABLE OF PREVENTING PERMEATION OF LIQUID, CUSHION AND CLEARANCE FILLING STRUCTURE**

(30) Priority: 23.05.2001 JP 2001154146
(71) Applicant: Bridgestone Corporation, Tokyo 104-8340 (JP)
(72) Inventor: USAMI, Kazuyoshi, Yokohama Plant Bridgestone Co, Yokohama-shi, Kanagawa 244-0812 (JP); KATSUMATA, Yoshihiro, Yokohama Plant Bridgeston Co, Yokohama-shi, Kanagawa 244-0812 (JP); KAMIMURA, Yasuo, Yokohama Plant Bridgestone Co, Yokohama-shi, Kanagawa 244-0812 (JP)
(74) Representative: Whalley, Kevin
(86) International application number: PCT/JP2002/004879
(87) International publication number: WO 2002/094710

(57) **Abstract**

A liquid impermeable bag is made with a foamed sheet, wherein the foamed sheet is obtained by foaming a raw mixture containing reactive silicone with hydroxyl groups and polyester polyol, a raw mixture containing reactive silicone with hydroxyl groups and organic phosphorus compound, or a raw mixture containing dimer acid polyol. A cushion member is made by feeding liquid raw material such as urethane liquid into the bag and foaming or curing the liquid raw material to be integrated with the bag. The permeation of the liquid raw material into the foamed sheet can be prevented and thus the leakage of the liquid raw material onto the surface of the bag, thereby providing a high-quality cushion member.

## Description

### FIELD OF THE INVENTION

The present invention relates to a liquid impermeable bag and also to a cushion member and a space-filling structure which have the bag and an enclosed material foamed or cured therein.

### RELATED ART

As one of methods for manufacturing cushion member used for a headrest or an arm rest used in an automobile, there is a method using a double layer sheet consisting of a facing sheet and a foamed sheet or a triple layer sheet further including a resin film laminated on a surface of the foamed sheet opposite to the surface thereof on which the facing sheet is superposed. The method has sewing the double or triple layer sheet into a bag with the facing sheet outward, pouring raw liquid for polyurethane into an obtained bag, and foaming the liquid, thereby forming an integral cushion member.

When a cushion member is manufactured by the aforementioned method, the raw liquid for the polyurethane foam poured into the bag may permeate into the foamed sheet and ooze out of the cushion member onto the facing sheet. A great amount of the raw liquid permeates into a portion of the foamed sheet having higher permeability than other area of the sheet, so that the portion becomes hard after the raw liquid is hardened. In this case, a user of the cushion member may feel something as a foreign matter when touching the surface of the cushion member.

The permeation of the raw liquid for polyurethane into the foamed sheet may occur the following problems:
(1) Deterioration in appearance of the cushion member may occur due to the leaching of the foam liquid onto the surface and deterioration in quality which the user may feel something as a foreign matter due to partial permeation.
(2) To foam the polyurethane foam liquid into a predetermined volume, the amount of the raw liquid to be poured into the bag should be set with a permeated amount. Accordingly, the required amount of the polyurethane foam liquid is increased so as to compensate the leached raw liquid.

In case of using a triple layer sheet with a resin film laminated thereon for manufacturing the bag, the resin film prevents the raw liquid from permeating into the foamed sheet to some extent. However, even using the triple layer sheet, the raw liquid may permeate the foamed sheet and still may ooze onto the surface through pin holes created in the resin film due to foreign objects in the manufacturing process or impact during transportation, flaws created due to tension or heat in the laminating process, and/or holes created due to friction or scratches in the sewing process into the bag shape. To ensure the prevention of permeation of the raw liquid by the resin film, it is required to take care not to create flaws nor holes during the manufacture and transportation of the resin films and pay the closest attention to set the laminating condition.

These problems may be caused not only in case of using the raw liquid for polyurethane, but also in case of pouring curable silicone liquid into a bag and curing the silicone liquid to integrally form silicone rubber.

For example, in case of directly pouring curable silicone liquid into a bag made of fabric or a conventional bag made with a foamed sheet, the curable silicone liquid may permeate the bag and may be leached.

In case of using a bag made of polyvinyl, the problems of permeation of the curable silicone liquid and of leaching of the liquid can be solved. However, the hardness of the silicone rubber can not be absorbed by the bag. When the obtained product is used as an armrest, the hardness is directly transmitted to a user's arm so that the user may feel pain if using for a long time.

### DISCLOSURE OF THE INVENTION

It is an object of the present invention to provide a bag made with a foamed sheet having excellent liquid impermeability for preventing permeation of liquid such as raw liquid for polyurethane foam.

It is another object of the present invention to provide a high quality cushion member and a space-filling structure which are each formed by feeding raw liquid into a bag made with a foamed sheet and foaming or curing the liquid therein, wherein the raw liquid can be prevented from permeating the foamed sheet and from leaching onto a surface of the bag.

A liquid impermeable bag of the present invention is made with a foamed sheet obtained by foaming a raw mixture for polyurethane foam. In one aspect, the raw mixture contains reactive silicone with hydroxyl groups and polyester polyether polyol,

In another aspect, the raw mixture contains reactive silicone with hydroxyl groups and organic phosphorus compound.

In still another aspect, the raw material contains dimer acid polyol.

The foamed sheet obtained by foaming any one of the raw mixtures is hard to allow the permeation of liquid raw material such as urethane raw liquid.

A cushion member and a space-filling structure of the present invention have a liquid impermeable bag as mentioned above. The cushion member of the present invention has a bag made with a foamed sheet and a cushion element disposed in the bag, wherein the cushion element is made from raw liquid fed into the bag, and the foamed sheet is one of the above three aspects.

The space-filling structure of the present invention has a bag disposed in a space, and a filler filled in the bag, wherein the filler is made from the raw liquid fed into the bag and the foamed sheet is one of the above three aspects.

Since the foamed sheet employed in the above cushion member and the structure is hard to allow the permeation of the raw liquid, deterioration in appearance of the cushion member due to the leaching of the raw liquid onto the surface of the bag and partial permeation of the raw liquid which may cause a user to feel the portion as a foreign matter can be prevented.

When the cushion element in the cushion member has relatively high hardness such as silicone rubber, the cushion member can have soft touch because of the buffering function of the foamed sheet of the bag.

The cushion element may be polyurethane foam which is obtained by feeding raw liquid for polyurethane foam into the bag and foaming the raw liquid. Alternatively, the cushion element may be silicone rubber which is obtained by feeding curable silicone liquid into the bag and curing it in the bag.

The cushion member of the present invention may have a facing sheet arranged on the outer surface of the bag.

The facing sheet may be attached to the foamed sheet by the flame lamination method. The facing sheet may be arranged after the raw liquid is fed and cured in the bag to become integral with the bag. A resin film may be laminated on a surface of the foamed sheet opposite to the surface on which the facing sheet is arranged.

The cushion member obtained as mentioned above can be suitably used as an interior article of an automobile, an arm rest to be used with an OA machine, an article of furniture, an article of bedding, a toy, or a sports article. As concrete examples, there are a headrest, an arm rest, an EA member, a trim, and a ceiling material for an automobile, an arm rest for a personal computer, an arm rest, headrest, leg rest, and foot rest of an article of furniture, a chair, a cushion, a pillow, a stuffed toy, and a plastic model kit.

Moreover, the space-filling structure of the present invention can be suitably used as an interior article of an automobile such as a pillar.

### BRIEF DESCRIPTION OF THE DRAWINGS

Fig. 1 is a sectional view of a headrest as an embodiment of a cushion member of the present invention;
Fig. 2 is an enlarged view of a part II of Fig. 1;
Fig. 3 is a perspective view of an armrest to be used with a personal computer as another embodiment of the cushion member of the present invention;
Fig. 4 is a sectional view taken along a line IV-IV of Fig. 3; and
Figs. 5A, 5B are sectional views of a pillar for an automobile as an example a space-filling structure of the present invention, wherein Fig. 5A shows a state before polyurethane foam liquid is poured and Fig. 5B shows a state after the polyurethane foam liquid is poured.

### DESCRIPTION OF THE PREFERRED EMBODIMENTS

Hereinafter, the present invention will be described in detail.

First, the foamed sheet for the liquid impermeable bag, the bag of the cushion member, and the space-filling structure according to the present invention will be described in detail.

The foamed sheet is manufactured by foaming a raw mixture containing polyhydroxy compound (polyol), isocyanate, foaming agent, catalyst, foam stabilizer, and at least one additive, if necessary, to be formed into a sheet by the ordinary method. The raw mixtures is one of the following raw mixtures i), ii) and iii):
i) Raw mixture including reactive silicone with hydroxyl group(s) and polyester polyether polyol;
ii) Raw mixture including reactive silicone with hydroxyl group(s) and organic phosphorus compound; and
iii) Raw mixture including dimer acid polyol.

In the raw mixture of the above i), examples of the reactive silicone with hydroxyl group(s) are compounds of which backbone chain and/or branched chains has one or two or more OH groups, such as compounds indicated by one of the following formulas I to III.

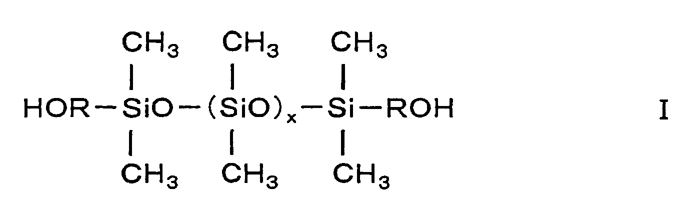

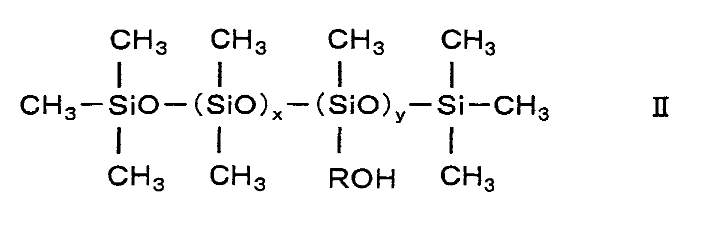

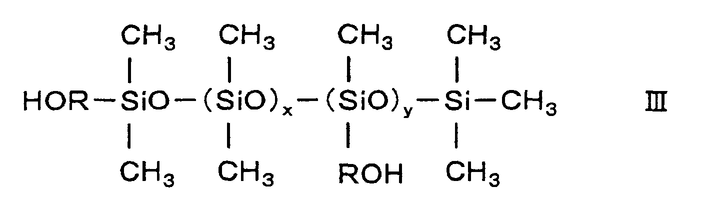

In the above formulas I to III, R represents an alkylene group.

The reactive silicone of which a backbone chain and/or branched chains has one or more OH groups can be obtained by modifying silicone oil with alcohol.

The reactive silicone with hydroxyl group(s) is used as a foam stabilizer.

The polyester polyether polyol may be obtained by reacting a polyhydric alcohol, such as ethylene glycol, glycerin, or trimethylolpropane, with alkylene oxide such as propylene oxide or butylene oxide and polycarboxylic acids such as adipic acid, phthalic acid, or succinic acid. The polyester polyether polyol preferably has a molecular weight from 1000 to 6000 and an OH value from 20 to 80.

In the raw mixture of the aforementioned i) using polyester polyether polyol as the polyol component and using reactive silicone with hydroxyl group(s) as the foam stabilizer, there is no particular limitation on the isocyanate component, the foaming agent, and the catalyst. As the isocyanate, tolylenediisocyanate, polymethylene polyethylene polydiisocyanate, hexamethylene diisocyanate, 1,5-naphthalenediisocyanate, xylenediisocyanate, or isophorone diisocyanate may be employed.

As the foaming agent, water or methylene chloride may be used, but the forming agent is not limited thereto.

As the catalyst, tertiary amine, complex salt of tertiary amine, organic tin compound may be employed. For example, triethylene diamine, complex salt of triethylene diamine, triethylamine, complex salt of bisdimethylaminoethyl ether, N-methylmorpholine of bisdimethylaminoethyl ether, stannous octoate, stannic dibutyl lauric acid may be preferably employed.

At least one additive such an ultraviolet ray absorbing agent, an antioxidant agent, and a pigment may be added if necessary.

As the polyol component, besides the aforementioned polyester polyether polyol, polyether polyol, polyester polyol, dimer acid polyol described later may be used. In this case, the ratio of the polyester polyether polyol is preferably 10 wt. % or more relative to the polyol component as a whole.

The foam stabilizer is not limited to the reactive silicone with hydroxyl groups.

The compositions of the raw mixture for the polyurethane foam of the above i) are preferably as follows, wherein the preferable isocyanate index is from 90 to 120:
polyester polyether polyol : 100 parts by weight;
isocyanate component: 20-80 parts by weight;
reactive silicone with hydroxyl groups : 0.3-5.0 parts by weight;
catalyst: 0.01-5.0 parts by weight;
foaming agent: 1.0-15.0 parts by weight; and
other additives : 40 parts by weight or less.

In the polyurethane foam raw mixture of the above ii), the examples cited above as used in the polyurethane foam raw mixture of the above i) may be used as the reactive silicone with hydroxyl groups.

As the organic phosphorus compound, there are phosphate-type polyether polyol and phosphite-type polyol which are obtained by adding alkylene oxide such as ethylene oxide, propylene oxide into phosphoric ester, and mixture thereof. Known flame retardants such as tris(2-chloroethyl)phosphate, tris(β-chloropropyl)phosphate, tris(dichloropropyl) phosphate, cresyldiphenylphosphate, and dibromoneopentyl glycol may also be employed. These may be added as a flame retardant, or a fusion property conditioner for the flame lamination process.

As the isocyanate component, the foaming agent, the catalyst, and other additives of the raw mixture of the above ii), the examples cited above as used in the polyurethane foam raw mixture of the above i) may be employed.

As the polyol component, there are alkylene oxide additives of polyalcohol such as ethylene glycol, propylene glycol, glycerin, trimethylolpropane, pentaerythritol, and cane sugar; alkylene oxide additives such as diethanolamine, triethanolamine, and ethylene diamine, and graft-type polymer polyol such as styrene and acrylonitrile. As the polyester polyol, there may be polyester polyol having hydroxyl groups at terminal end obtained by polymerizing fatty carboxylic acid such as malonic acid, succinic acid, or adipic acid, aromatic carboxylic acid such as phthalic acid, terephthalic acid, or a mixture thereof, with fatty glycols such as ethylene glycol, propylene glycol, diethylene glycol or triol such as trimethylolpropane, glycerin, and polyester polyol such as polycaprolactone obtained by ring opening polymerization of lactone. The polyol preferably has a molecular weight from 600 to 8000 and an OH value from 20 to 100. As the polyol component, polyester polyether polyol as described above and/or dimer acid polyol as described later may be used. As the foam stabilizer, another foam stabilizer may be used together with the reactive silicone with hydroxyl groups, similarly to the polyurethane foam raw mixture of the above i).

The compositions of the raw mixture of the above ii) are preferably as follows, wherein the preferable isocyanate index is from 90 to 120:
polyol component: 100 parts by weight;
isocyanate component : 20-80 parts by weight;
reactive silicone with hydroxyl groups : 0.3-5.0 parts by weight;
catalyst: 0.01-5.0 parts by weight;
foaming agent: 1.0-15.0 parts by weight;
organic phosphorus compound : 0.5-30 parts by weight; and
other additives : 20 parts by weight or less.

In the raw mixture of the above iii), the followings may be used as the dimer acid polyol.

That is, the dimer acid is a dibasic acid, that is, a dibasic acid of which molecular obtained by bonding two monobasic fatty chains (the number of carbons is normally 18) according to carbon-carbon covalent bonding. Typical compounds as the dimer acid are obtained by heating linoleic acid and oleic acid and are represented by the following structural formula:

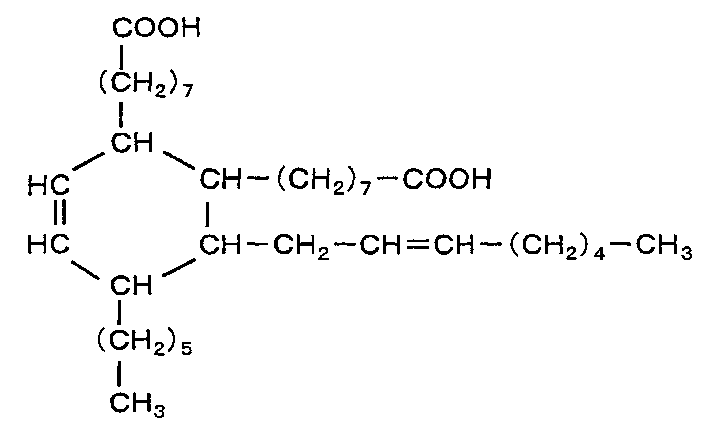

As the dimer acid polyol, examples include dimer acid polyesters which is reaction products from such dimer acid and shorter-chain diol, triol, or polyol; reaction products from such dimer acid and polyalkylene glycol, poryalkylene triole, or long-chain polyol; reaction products obtained by reacting mixture of dimer acid and other polycarboxylic acid such as adipic acid with diol, triol, or polyol; reaction products of such dimer acid and alkylene oxide, and mixture thereof. It should be noted the dimer acid polyol is not limited thereto.

As the polyol component, besides the dimer acid polyol, polyether polyol, polyester polyol, or polyester polyether polyol mentioned above may be employed. In this case, the ratio of the dimer acid polyol is preferably 10 wt. % or more relative to the polyol component as a whole.

As the isocyanate component, the foaming agent, the catalyst, and other additives of the polyurethane foam raw mixture of the above iii), the examples cited above as used in the polyurethane foam raw mixture of the above i) may be employed.

As the foaming agent, siloxane of any type, polyalkylene oxide block copolymer, or reactive silicone with hydroxyl groups mentioned above may be employed.

The compositions of the raw mixture of the above iii) are preferably as follows, wherein the preferable isocyanate index is from 90 to 120:
dimer acid polyol : 100 parts by weight;
isocyanate component: 20-80 parts by weight;
foam stabilizer : 0.3-5.0 parts by weight;
catalyst: 0.01-5.0 parts by weight;
foaming agent: 1.0-15.0 parts by weight; and
other additives : 40 parts by weight or less.

A foamed sheet manufactured by foaming and forming any one of the aforementioned raw mixtures into a sheet preferably has a density of 20-70 g/cm³, and an air permeability of 0-10 cc/m²/sec (at a foam thickness of 10 mm), as measured by a FRAGILE type testing apparatus as specified in Japanese Industrial Standard (JIS) L1004. The thickness of the foamed sheet is preferably in the order of 1.0-20.0 mm.

According to the present invention, such a foamed sheet may be employed singly, with a facing sheet attached on one surface so as to form a double layer sheet, or with a resin film attached to the other surface in addition to the facing sheet so as to form a triple layer sheet.

As the facing sheet, fabric such as tricot, double raschel, moquette, plain weave fabric, non woven fabric, PVC leathercloth, resin film, resin sheet, paper, or complexities thereof may be employed. The facing sheet is preferably attached to the foamed sheet by the flame lamination method. The facing sheet may be put on the surface of the bag after liquid raw material is poured into the bag and formed integrally with the bag.

In case of using a triple layer sheet made with the foamed sheet, a polyolefin resin film or a polyurethane resin film may be employed as the resin film. The films are laminated, for example, by a laminating method.

A foamed sheet or a laminated sheet is processed to be formed into a bag by sewing or the like. In case of using a laminated sheet with a facing sheet, the laminated sheet is formed into a bag with the facing sheet outward.

A cushion member of the present invention is formed by feeding raw liquid such as urethane liquid into the bag and foaming or curing the liquid to be integrated with the bag.

A space-filling structure of the present invention is accomplished by disposing the bag as mentioned above into a space, feeding raw liquid such as urethane liquid into the bag, and foaming or curing the liquid to be integrated with the bag.

The raw liquid to be fed into the bag are as follows:
[A] Liquid for polyurethane foam : In this case, the cushion member or the space-filling structure can be obtained by feeding the urethane raw liquid into the bag and foaming the raw liquid so as to integrate the polyurethane foam and the bag. In case of the cushion member, raw liquid for soft polyurethane foam having cushioning property is generally used. In case of the space-filling structure, raw liquid for hard polyurethane foam may be employed besides the raw liquid for the soft polyurethane foam.
[B] Curable silicone liquid: In this case, the cushion member or the space-filling structure can be obtained by feeding the curable silicone liquid into the bag and curing the silicone liquid so as to integrate the silicone rubber and the bag.
[C] Gypsum: In this case, the cushion member or an absorbing member can be obtained by feeding gypsum liquid for medial use or handicraft use into the bag and hardening the gypsum liquid so as to integrate the gypsum and the bag.
[D] Polyester resin: In this case, the cushion member having improved cushion property can be obtained by feeding liquid polyester resin into the bag and curing the liquid so as to integrate the resin and the bag.

The raw liquid [A] may be for hard or soft urethane foam for molding use having any compositions. As the isocyanate component, the catalyst, the foaming agent, and other additives thereof, the examples cited above as used in the material of the foamed sheet may be employed. As the polyol component, there are alkylene oxide additives of polyalcohol such as ethylene glycol, propylene glycol, glycerin, trimethylolpropane, pentaerythritol, and cane sugar; alkylene oxide additives such as diethanolamine, triethanolamine, and ethylene diamine, and graft-type polymer polyol such as styrene and acrylonitrile. The polyol preferably has a molecular weight from 3000 to 8000 and an OH value from 20 to 100. As the foam stabilizer, siloxane of any type or polyalkylene oxide block copolymer may be employed.

The isocyanate index of the polyurethane foam liquid is preferably from 90 to 120.

The curable silicone liquid [B] mentioned above may be of a one-component condensation reaction type, a one-component addition reaction type, a two-component condensation reaction type, and the like.

The foamed sheet used in the present invention has excellent impermeability against liquid raw material such as the aforementioned polyurethane foam liquid and the curable silicone liquid, thereby preventing deterioration in appearance of the cushion member due to the leaching of the foam liquid onto the surface and preventing partial permeation of the liquid raw material which may cause the user to feel the portion as a foreign matter. In addition, because of the presence of the bag made with the foamed sheet, the cushion member has soft touch.

In the space-filling structure of the present invention, the leakage of the liquid raw material out of the bag and the permeation of the liquid raw material can be prevented, thereby preventing poor working condition and avoiding the loss of the liquid raw material. Therefore, a labor can conduct the filling work under well working condition, thereby obtaining improved filling effect.

The cushion member obtained as mentioned above can be suitably used as an interior article of an automobile such as a headrest, an arm rest to be used with an OA machine such as a personal computer, or the like. Besides, the cushion member can be suitably used as an article of furniture, an article of bedding, a toy, or a sports article. As concrete examples, there are a headrest, an arm rest, an EA (energy absorbing) member, a trim, and a ceiling material for an automobile, an arm rest for a personal computer, an arm rest, headrest, leg rest, and foot rest of an article of furniture, a chair, a cushion, a pillow, a stuffed toy, and a plastic model kit.

Moreover, the space-filling structure of the present invention can be suitably used as an interior article of an automobile such as a pillar.

Hereinafter, embodiments of the present invention will be described in detail with reference to attached drawings.

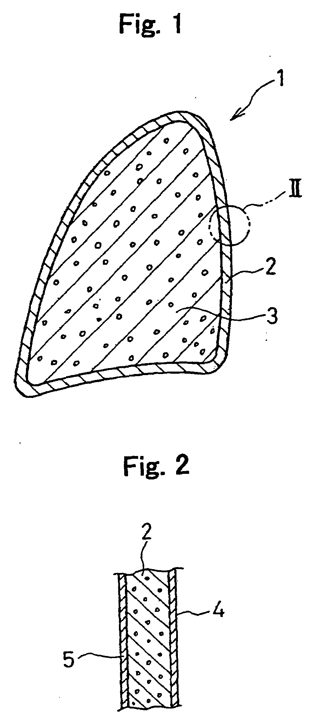

Fig. 1 is a sectional view of a headrest as an embodiment of a cushion member of the present invention and Fig. 2 is an enlarged view of a part II of Fig. 1.

The headrest 1 comprises a bag 2, a polyurethane foam 3 disposed in the bag 2, and a facing sheet 4 arranged on the outer surface of the bag 2. The bag 2 is made by sewing a foamed sheet with the facing sheet 4 on its one surface into a bag shape with the facing sheet 4 outward. Raw liquid for polyurethane foam is fed into the bag 2 with the facing sheet 4 and is foamed, thereby making the bag 2 filled with the polyurethane foam 3. The urethane liquid is foamed in a state that a headrest frame is arranged inside the bag 2, whereby the headrest frame can be inserted, but not illustrated. It should be noted that a resin film 5 may be attached to the inner surface of the bag 2.

The headrest 1 has no leakage problem of the urethane liquid onto the facing sheet 4 and no permeation problem of the urethane liquid into the bag 2 so that the headrest 1 has superior cushioning property, good appearance, and soft touch.

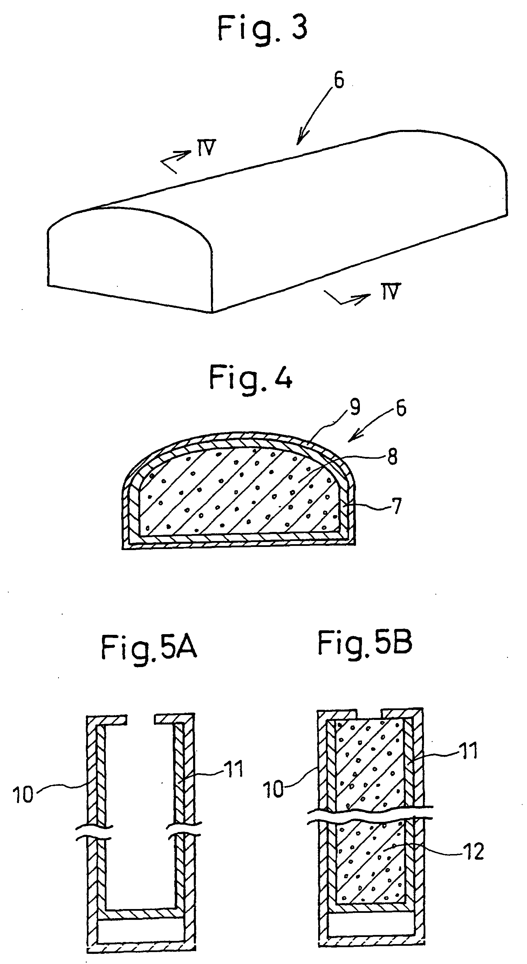

Fig. 3 is a perspective view of an arm rest to be used with a keyboard or mouse of a personal computer as another embodiment of the cushion member of the present invention, and Fig. 4 is a sectional view taken along a line IV-IV of Fig. 3.

The arm rest 6 has a bag 7 and a silicone rubber 8 disposed in the bag 7, and a facing sheet 9 arranged on the outer surface of the bag 7. The bag 7 is made by cutting a foamed sheet into a predetermined size and sewing the foamed sheet into a bag shape. Curable silicone liquid is fed into the bag 7 and is cured. Then, the facing sheet 9 is disposed to cover the bag 7. As a result of this, the bag 7 is filled with the silicone rubber 8 and covered by the facing sheet 9.

Similarly, the arm rest 6 has no permeation problem of the curable silicone liquid into the bag 7 so that the arm rest 6 has superior cushioning property and good appearance. In addition, the foamed sheet of the bag 7 prevents the hardness of silicone rubber from being transmitted to a user's arm, thereby providing enough effect of softening the load on the user's arm for many minutes (hours).

Figs. 5A, 5B are sectional views of a pillar of an automobile as an example a space-filling structure of the present invention, wherein Fig. 5A shows a state before urethane liquid is fed and Fig. 5B shows a state after the urethane liquid is fed.

A bag 11 is inserted into a space as a hollow portion of a pillar 10 of an automobile and then urethane liquid is poured into the bag 11 and is foamed. As a result, the bag 11 is filled with the polyurethane foam 12. The bag 11 is made by cutting a foamed sheet into a predetermined size and sewing the foamed sheet into a bag shape. The urethane liquid may be for soft polyurethane foam or for hard polyurethane foam.

Filling the space of the pillar 10 with the polyurethane foam 12 as mentioned prevents wind noise and improves the rigidity of the vehicle body. During the process of filling the space with the polyurethane foam 12, the urethane liquid can be prevented from leaking out of the bag 11. Therefore, a labor can conduct the filling work under well working condition, thereby obtaining improved filling effect.

Examples and Comparative Examples are given below for describing the present invention more concretely.

### Example 1

A foamed sheet which was 4 mm in thickness and had density and permeability shown in Table 1 was obtained by foaming a raw mixture (isocyanate index: 104) having the below-described composition for polyurethane foam.

A tricot fabric was attached to one surface of the foamed sheet by the flame lamination method, thereby forming a double layer sheet.

The permeability of the double layer sheet was shown in Table 1.

### [Urethane raw mixture for the foamed sheet (parts by weight)]

Polyester polyether polyol (molecular weight: 3000, OH value: 56): 30
Polymer polyol (molecular weight: 5600, OH value: 31) : 70
Isocyanate component (tolylenediisocyanate) : 35
Reactive silicone with hydroxyl groups (OH value: 58) : 1.0
Catalyst (amine catalyst) : 0.1
Catalyst (tin catalyst) : 0.3
Foaming agent (water) : 2.6

The double layer sheet made with the foamed sheet thus obtained was sewn to form a bag. By pouring urethane liquid (isocyanate index: 105) having the below-described composition into the bag and foaming the urethane liquid, a headrest was formed. The condition of penetration of the liquid into the bag was measured before foaming and the result was shown in Table 1.

### [Composition of the urethane liquid (parts by weight)]

Polyol (molecular weight: 5000, OH value: 33.5) : 50
Polymer polyol (molecular weight: 6000, OH value: 28) : 50
Isocyanate component (tolylenediisocyanate) 21.5
Isocyanate component (polymethylene polyphenyl polyisocyanate) : 5.4
Silicone foam stabilizer : 1.0
Catalyst (amine catalyst) : 0.55
Foaming agent (water) : 2.2

### Example 2

A foamed sheet which was 4 mm in thickness and had density and permeability shown in Table 1 was obtained by foaming a urethane raw mixture (isocyanate index: 110) having the below-described composition.

A tricot fabric was attached to one surface of the foamed sheet by the flame lamination method, thereby forming a double layer sheet.

The permeability of the double layer sheet was shown in Table 1.

### [Urethane raw mixture for the foamed sheet (parts by weight)]

Polyol component (Polymer polyol. Molecular weight: 5600, OH value: 31): 100
Isocyanate component (tolylenediisocyanate) : 40
Reactive silicone with hydroxyl groups (OH value: 58) : 1.0
Organic phosphorus compound (tris-dipropyleneglycol phosphate) : 1.5
Catalyst (amine catalyst) : 0.1
Catalyst (tin catalyst) : 0.15
Foaming agent (water) : 2.8

By using the double layer sheet thus obtained, a headrest was made in the same manner as Example 1. In addition, the condition of penetration of the liquid into the bag was measured and the result was shown in Table 1.

### Example 3

A foamed sheet which was 4 mm in thickness and had density and permeability shown in Table 1 was obtained by foaming a urethane raw mixture (isocyanate index: 110) having the below-described composition.

A tricot fabric was attached to one surface of the foamed sheet by the flame lamination method, thereby forming a double layer sheet.

The permeability of the double layer sheet was shown in Table 1.

### [Urethane raw mixture for the foamed sheet (parts by weight)]

Dimer acid polyol: 100
Isocyanate component (tolylenediisocyanate) : 40
Reactive silicone with hydroxyl groups (OH value: 58) : 2.5
Catalyst (amine catalyst) : 0.3
Catalyst (tin catalyst) : 0.5
Foaming agent (water) : 2.5

By using the double layer sheet thus obtained, a headrest was made in the same manner as Example 1. In addition, the condition of penetration of the liquid into the bag was measured and the result was shown in Table 1.

### Comparative Example 1

A foamed sheet having density and permeability shown in Table 1 was made in the same manner as Example 1, but using urethane raw mixture for a foamed sheet having the below-described composition. A tricot fabric was attached to one surface of the foamed sheet by the flame lamination method, thereby forming a double layer sheet.

### [Urethane raw mixture for the foamed sheet (parts by weight)]

Polyol component (Polymer polyol. Molecular weight: 5600, OH value: 31) : 100
Isocyanate component (tolylenediisocyanate) : 35
Foam stabilizer (silicone) : 1.0
Catalyst (amine catalyst) : 0.1
Catalyst (tin catalyst) : 0.15
Foaming agent (water) : 2.6

The permeability of the double layer sheet was shown in Table 1.

In the same manner as Example 1, the condition of penetration of the liquid was measured about the double layer sheet thus obtained and the result was shown in Table 1.

### Comparative Examples 2, 3

For each of Comparative Examples 2, 3, a laminated body of was made in the same manner as Comparative Example 1, but further laminating a resin film shown in Table 1 on a surface of the foamed sheet opposite to the surface to which the tricot was attached. As a result, a triple layer sheet having permeability shown in Table 1 was formed. The condition of penetration of liquid was measured by flowing polyurethane foam liquid onto the surface laminated with the resin film and the result was shown in Table 1.

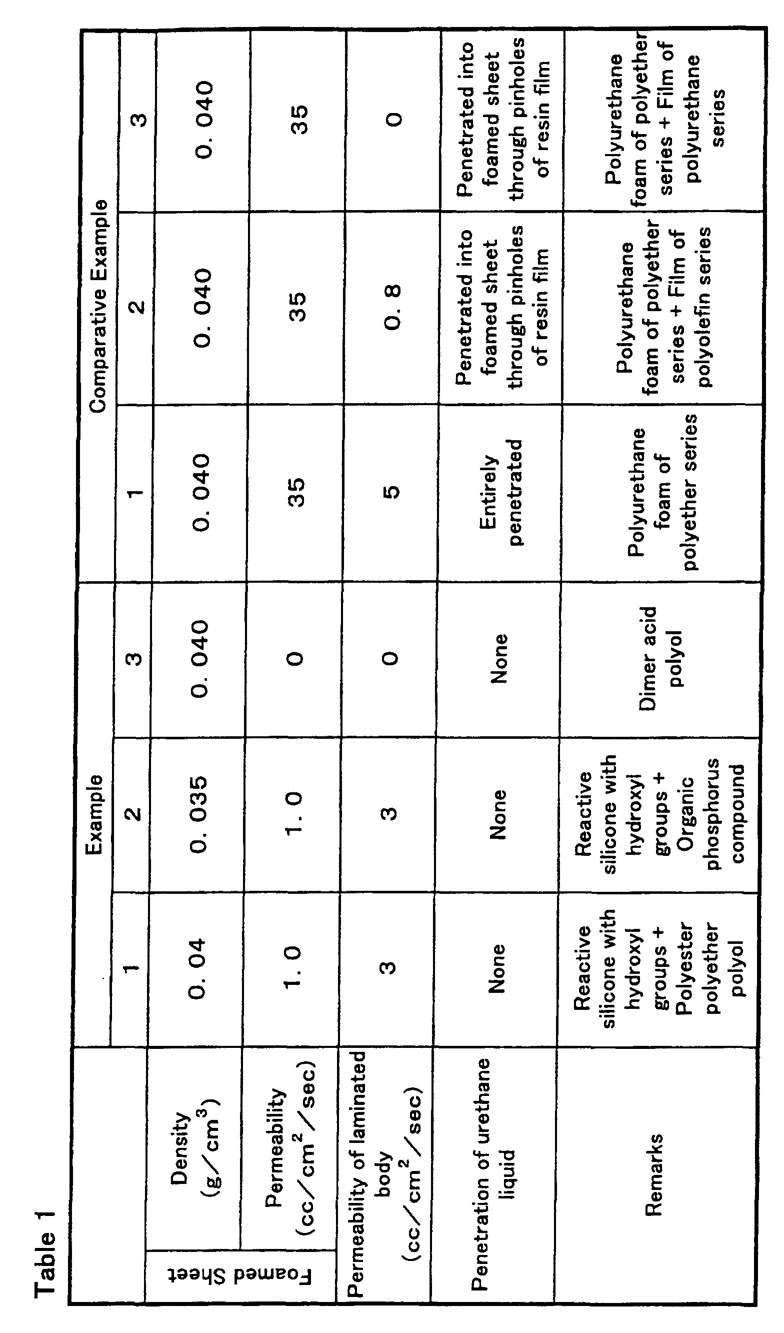

It is found from Table 1 that, according to the cushion member of the present invention, the penetration problem of urethane liquid into the foamed sheet composing the bag is resolved.

It should be noted that any of the headrests made in Examples 1-3 was excellent in appearance and soft to touch because there was no deterioration in appearance of the cushion member due to the leaching of the urethane liquid onto the surface and no partial permeation of the urethane liquid so that the user may not feel the portion as a foreign matter.

### INDUSTRIAL APPLICABILITY

As apparent from the above, the present invention can provide the cushion member which is excellent in appearance and soft to touch because the permeation of the liquid raw material into the foamed sheet composing the bag can be prevented so that there was no deterioration in appearance of the cushion member due to the leaching of the liquid raw material onto the surface of the bag and no partial permeation of the urethane liquid so that the user may not feel the portion as a foreign matter. In addition, the present invention can provide a space-filling structure in which the permeation of the liquid raw material can be prevented and which is excellent in filling property.

## Claims

1. A liquid impermeable bag being made with a foamed sheet, wherein said foamed sheet is obtained by foaming a raw mixture containing reactive silicone with hydroxyl groups and polyester polyether polyol for polyurethane foam.

2. A liquid impermeable bag being made with a foamed sheet, wherein said foamed sheet is obtained by foaming a raw mixture containing reactive silicone with hydroxyl groups and organic phosphorus compound for polyurethane foam.

3. A liquid impermeable bag being made with a foamed sheet, wherein said foamed sheet is obtained by foaming a raw mixture containing dimer acid polyol for polyurethane foam.

4. A liquid impermeable bag as claimed in any one of claims 1 through 3, wherein a facing sheet is arranged on the outer surface of the bag.

5. A liquid impermeable bag as claimed in claim 4, wherein the foamed sheet is made of polyurethane foam for flame lamination.

6. A liquid impermeable bag as claimed in any one of claims 1 through 5, wherein a resin film is laminated on an inner surface of the bag.

7. A cushion member comprising a bag made with a foamed sheet and a cushion element disposed in the bag,
wherein the cushion element is made from a liquid raw material fed into the bag, and
wherein the foamed sheet is obtained by foaming a raw mixture containing reactive silicone with hydroxyl groups and polyester polyether polyol for polyurethane foam.

8. A cushion member comprising a bag made with a foamed sheet and a cushion element disposed in the bag,
wherein the cushion element is made from liquid raw material fed into the bag, and
wherein the foamed sheet is obtained by foaming a raw mixture containing reactive silicone with hydroxyl groups and organic phosphorus compound for polyurethane foam.

9. A cushion member comprising a bag made with a foamed sheet and a cushion element disposed in the bag,
wherein the cushion element made from liquid raw material fed into the bag, and
wherein the foamed sheet is obtained by foaming a raw mixture containing dimer acid polyol for polyurethane foam.

10. A cushion member as claimed in any one of claims 7 through 9, wherein said cushion element is polyurethane foam, and wherein said polyurethane foam is made by feeding urethane liquid into said bag and foaming the urethane liquid.

11. A cushion member as claimed in any one of claims 7 through 9, wherein said cushion element is silicone rubber, and wherein said silicone rubber is made by feeding curable silicone liquid into said bag and curing the curable silicone liquid.

12. A cushion member as claimed in any one of claims 7 through 11, wherein a facing sheet is arranged on the outer surface of said bag.

13. A cushion member as claimed in claim 12, wherein said foamed sheet is made of polyurethane foam for flame lamination and said facing sheet is attached to said foamed sheet by flame lamination method.

14. A cushion member as claimed in any one of claims 7 through 13, wherein a resin film is laminated on an inner surface of the bag.

15. A cushion member as claimed in any one of claims 7 through 14, wherein the cushion member is an interior article of an automobile, an arm rest to be used with an OA machine, an article of furniture, an article of bedding, a toy, or a sports article.

16. A space-filling structure comprising a bag, made with a foamed sheet and disposed in a space, and a filler disposed to fill the bag,
wherein the filler is made from liquid raw material fed into the bag, and
wherein the foamed sheet is obtained by foaming a urethane raw mixture containing reactive silicone with hydroxyl groups and polyester polyether polyol.

17. A space-filling structure comprising a bag made with a foamed sheet and a filler disposed to fill the bag,
wherein the filler is made from liquid raw material fed into the bag, and
wherein the foamed sheet is obtained by foaming a urethane raw mixture containing reactive silicone with hydroxyl groups and organic phosphorus compound.

18. A space-filling structure comprising a bag made with a foamed sheet and a filler disposed to fill the bag,
wherein the filler is made from liquid raw material fed into the bag, and
wherein the foamed sheet is obtained by foaming a urethane raw mixture containing dimer acid polyol.

19. A space-filling structure as claimed in any one of claims 16 through 18, wherein said filler is polyurethane foam, and wherein said polyurethane foam is made by feeding urethane liquid into said bag and foaming the urethane liquid.

20. A space-filling structure as claimed in any one of claims 16 through 19, wherein said space-filling structure is an interior article of an automobile.
